Europäisches Patentamt

European Patent Office

Office européen des brevets

(11) Publication number: **0 360 335**
A2

# EUROPEAN PATENT APPLICATION

(21) Application number: 89202313.6

(51) Int. Cl.5: **B62H 5/00**

(22) Date of filing: 14.09.89

(30) Priority: 20.09.88 ES 8802774
27.01.89 ES 8900250

(43) Date of publication of application:
28.03.90 Bulletin 90/13

(84) Designated Contracting States:
AT BE CH DE FR GB GR IT LI LU NL SE

(71) Applicant: **Diaz-Miguel Sanchez, Guillermo**
**Blasco de Garay, 76- 6. D**
**E-28003 Madrid(ES)**

(72) Inventor: **Diaz-Miguel Sanchez, Guillermo**
**Blasco de Garay, 76- 6. D**
**E-28003 Madrid(ES)**

(74) Representative: **Ungria Lopez, Javier et al**
**Avda. Ramon y Cajal, 78**
**E-28043 Madrid(ES)**

(54) Support for safety devices for two-wheeled vehicles.

(57) It consists of two rectangular strips (1-2) (1'-2') with paired opening passages (4, 5) of respective screws (6) of coupling and immobilization of a tubular section (7) of the frame of the vehicle. One of these strips (2, 2') has solidly connected to it an exterior tube (3, 3') through whose axial opening (11) one of the sections (12) of the fork (13, 13') of the safety device (10, 10') has to pass, immobilizing with the tightening of a screw (15) which goes through the wall of the tube (3, 3'.)

The tightening is exerted with interpositioning of a flexible sheet (22) located in the inside of a recess or slot (24) made logitudinally in the inner surface of the tube (3, 3') to which it is fixed by one of its ends.

FIG.1

EP 0 360 335 A2

**SUPPORT FOR SAFETY DEVICES FOR TWO-WHEELED VEHICLES**

## OBJECT OF THE INVENTION

As is expressed in the title of this specification, the present invention refers to a support for safety devices of two-wheeled vehicles, said device being defined by a lock whose long fork is separable from the body thereof in order to make it possible and to facilitate placement thereof on the motorcycle in such a way that it prevents the rotation of the driving wheel, as usual, also facilitating the removal thereof when the motorcycle is going to be used.

An object of the invention is to offer a support which remains duly secured to the frame of the vehicle, in which the lock that defines the above-mentioned safety device can be easily anchored. There are also means of immobilization of the lock for the purpose of preventing bothersome vibrations when one is riding the vehicle. It is also prevented that these immobilization means can damage the outside layer of the fork of the lock, normally coated with plastic material.

## BACKGROUND OF THE INVENTION

At the present time there are some types of supports that are coupled to a motorcycle, in which a safety device can be placed when the latter is not used, that is to say, when one is riding the motorcycle or while the motorcycle is protected in a closed place.

Among these supports foreseen for different types of safety devices, the one made up of a tubular element with two rectangular sheets which split and which are welded with two diametrically opposite generators is to be emphasized. One of these sheets remains fixed to the fender in the place corresponding to the location of the licence plate, fastening this to the other plate of the support.

This type of support has a big inconvenience derived fro the fact that upon being fixed to a plastic element, such as the fender and taking into account that these long fork locks can weigh up to 4 kg., it becomes obvious that said fenders soon deteriorate; they even break due to the vibrations produced by the motor itself of the vehicle, as well as due to the irregularities of the ground during riding.

The inside diameter of the tube through which one of the sections of the lock fork in "U has to pass is notably larger than the section of the latter, so that a single support can be used for different locks, due to which the vibrations and noise increases. The life of the fender is also shortened.

## DESCRIPTION OF THE INVENTION

In general lines, the support for safety devices of two-wheeled vehicles, which the invention proposes is formed of two generally rectangular strips foreseen with paired holes for the passing of anchoring screws of the same, once they have been placed one on each side of the chosen tubular portion of the frame of the vehicle, or of the rods of the luggage carrier, maintaining the support totally stable.

One of said strips has solidly connected to it, preferably by welding, a tubular portion whose axial opening defines the passage means of one of the sections of the arch of the lock, said arch subsequently anchoring to the body of the lock to prevent the same from being removed by fraud.

Although with this arrangement, the lock that defines the safety device remains duly secured to the vehicle which implies ease for the user, a means of blocking or immobilizing the fork is foreseen in order to prevent the free movement of the lock with regard to the support, as a result of the vibrations produced during riding of the vehicle, with which bothersome noise typical of vibration is also avoided. This blocking means is defined by a butterfly screw which goes through the wall of the tubular portion of the support in order to press on the section of the lock against the opposite wall.

The inside surface of the frame immobilization strips is protected by a no-skid and dampening sheet in order to prevent that during the assembly of the support the tubular structure of the frame is damaged, as well as to prevent the sliding of the support as a result of the vibration.

Advantageously, the plates have a square shape and in the angular area there are holes for the passage of the screws which fasten the support to the frame and the plate without the tube also has an arched central area which remains in contact with the tubular portion of the frame, facilitating placement of the support. For a same position of this last plate, the support plate of the tube can be located in two positions: one in which the tube follows a direction axial to the axis of the curved portion of the other plate, and the other in which the tube occupies a position turned 90°, the one which is most favourable or advantageous is chosen.

Due to the fact that the fork of the lock which defines the safety device is normally protected by a layer of plastic material, with which the tightening of the blocking screw could manage to damage it, the invention also foresees that said tightening is effected upon an intermediate flexible sheet, fixed to the tubular section by one of its ends.

In order to facilitate the understanding of the features of the invention and forming an integral part of this specification, some diagrams are appended in whose figures the following has been represented in an illustrative and non-limiting manner:

## BRIEF DESCRIPTION OF THE DRAWINGS

Figure 1.- It is a perspective view of the support for safety devices for two-wheeled vehicles, object of the invention, showing with dash lines the lock which defines one of the known safety devices.

Figure 2.- It is a plan view of what is shown in figure 1 and in which the tubular section of the frame to which the support has been solidly connected has been included, as well as the section of the fork of the lock, upon which the blocking screw acts.

Figure 3.- It is a perspective view similar to the one of figure 1, in which an embodiment is seen, in which the sheets are square and in the inside of the tubular portion solidly connected to one of the sheets there is a flexible sheet which prevents the deterioration of the plastic covering of the fork of the lock.

Figure 4.- It is a plan view of what is shown in figure 3, with the support secured to a tubular portion of the frame of the vehicle and in the position in which the blocking of the fork of the lock is effected.

Figures 5, 6 and 7.- They are respective raised longitudinal sectioned to 1/4, plan and side raised views of the plate of the support which is provided with the tube, in the embodiment shown in figure 3.

Figures 8 and 9.- They are respective plan and side raised views of the other plate of the support of figure 3.

## DESCRIPTION OF THE PREFERRED EMBODIMENT

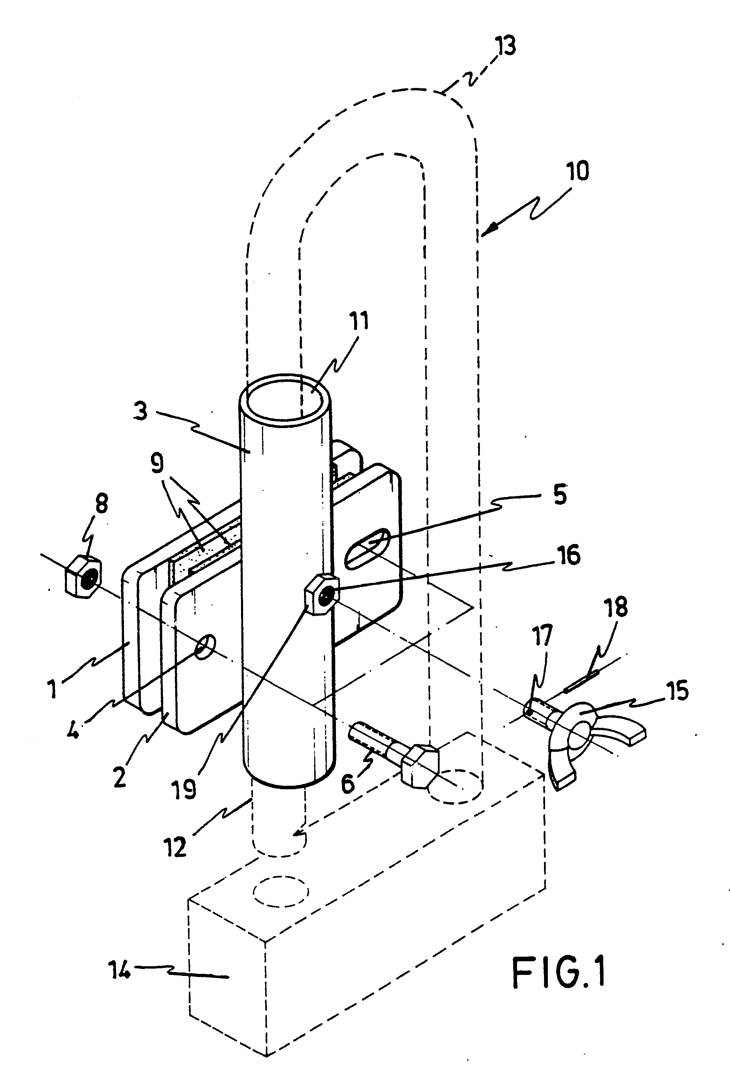

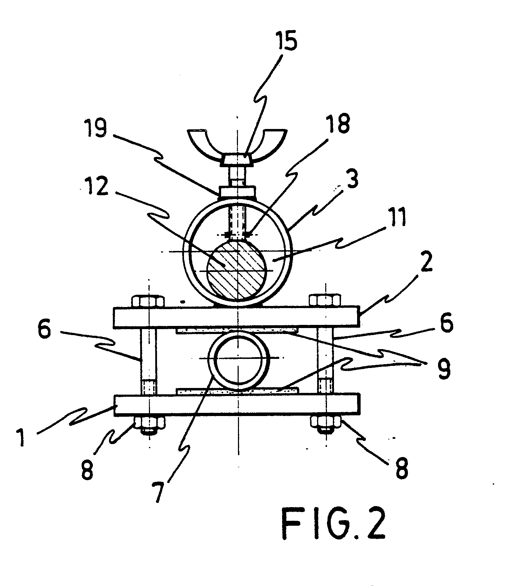

Making special reference to the numbering that is indicated in figures 1 and 2, we can see that the support for safety devices for two-wheeled vehicles, that the invention proposes, is made up of parallel strips referred to with 1 and 2, one of which has solidly connected to its outer surface and preferably by welding the tubular portion 3.

Each one of the strips 1 and 2 has confronted holes 4 and 5 through which the tightening screws 6 are made to pass.

The support is assembled in the chosen place of the two-wheeled vehicle by placing the strips 1 and 2 on both sides of the tubular section of the frame of the vehicle, as shown with 7 in figure 2. The tightening of the nuts 8 of the screws 6 immobilizes the support in the chosen position.

In order to prevent the tubular portion 7 of the frame of the vehicle from being damaged during assembly of the support, as well as to also prevent said support from sliding as a result of the vibrations caused during riding, the inside surfaces of the strips 1 and 2 have non-skid sheets 9, preferably glued on.

Although a simple construction of the support has been shown in these figures 1 and 2, with the strips 1 and 2 only provided with a pair of confronted holes and each one located on each side of the tubular portion 3, a larger number of holes may, nevertheless, be included and thus the assembly of the support to the tubular frame of the vehicle, to horizontal portions of its structure as well as to vertical portions of the same is made easier, as we will comment afterwards with regards to the remaining figures. Such holes can be circular, like those shown with no. 4 in the drawings, or else grooved like those referred to with no. 5.

As is inferred from observing figure 1, the safety device which is normally defined by a lock with a large fork, as shown with no. 10 in this figure 1 and shown with dash lines remains located in the support object of the invention, upon introducing through the axial opening 11 of the tubular portion 3 welded to the strip, the free section 12 of the fork 13 of the lock 10, after which the body of the same is installed. In this way, besides remaining well situated on the support, undesired removal of the lock 10 is prevented.

Although with the structure described up until now the safety device which is materilized in the lock remains duly secured to the frame of the vehicle, by means of the support object of the invention, it also foresees a blocking or immobilizing means of the lock 10, so that it does not vibrate in its housing, mainly to avoid bothersome noise. This is attained by a butterfly screw as shown with no. 15 in figures 1 and 2, which is introduced through the radial hole 16 of the tubular portion 3 of the support and which presses against the section 12 of the arch of the lock keeping this immobile.

The blocking screw 15 has on its inner end, that is to say, in the portion that goes through the inside of the tube 3, a diametral hole 17 through which the pin 18 is introduced, once the hole 17 is made visible by the inside of the tube 3, which determine non-removal means of the screw 15, to prevent it from accidentally coming out of its housing due to possible vibrations, as well as undesired removal of the same. The butterfly shape foreseen in its head facilitates its correct tightening to immobilize the lock or safety device 10.

As these figures 1 and 2 indicate, the threaded hole 16 of the tubular portion of the support, through which the stud of the butterfly screw 15 enters, is materialized by a nut 19 welded to the drilled wall of the former, with which this tube 3 can be rather thin, in any case less than what is needed. so that the required threads can be included in it.

The hole 11 through which the free section of the lock 10, or else any one of the section of a lock with an independent fork has been introduced, can be situated selectively in a horizontal, vertical and even oblique position, depending on the position that the strips 1 and 2 occupy, and the tubular portion 7 of the frame in which it is installed.

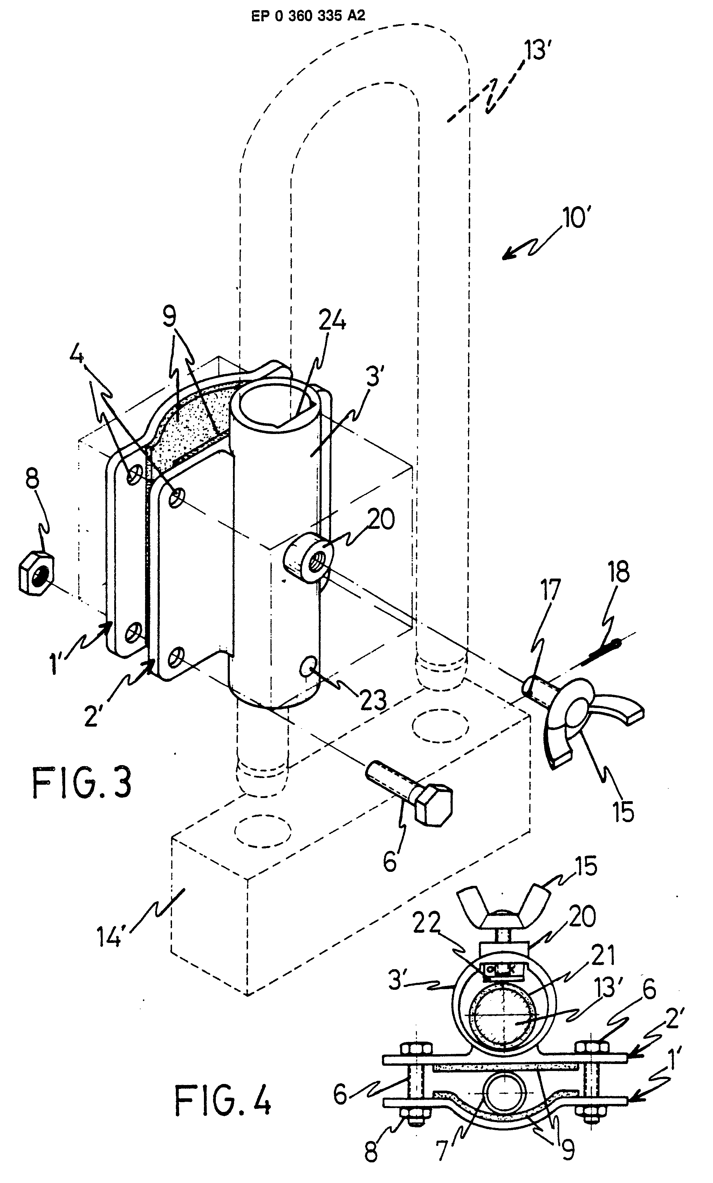

Now making reference to figures 3 to 9 in which an improved embodiment of the invention is shown, we can see that the plates 1 and 2 now are square and are represented with references 1' and 2'. In the vertexes thereof there are confronted holes 4 through which the screws 6 and fastening nuts 8 are made to pass.

The metallic plate 1' has an "omega" section in order to make it easy to put it in the rear part of one of the tubular portions 7 of the frame of the motorcycle, or one of the rods of the luggage carrier of the same. On the other side of the tubular portion 7 is the plate 2, joined solidly with the screws 6.

As advantageously the geometric centers of the holes 4 are located in the vertexes of a square, once the position of the plate 1' has been fixed in the convenient place, the plate 2 can be located so that the tube 3 in general acquires a vertical or horizontal position, the most adequate one being chosen.

Through the axial opening of the tube 3, as is observed in figure 3, one of the sections of the fork 13' of the safety device 10' of the motorcycle is introduced, after which the body 14' of the lock is put in place. The butterfly screw 15 is threaded in the radial salient 20 of the outer surface of the tube 3.

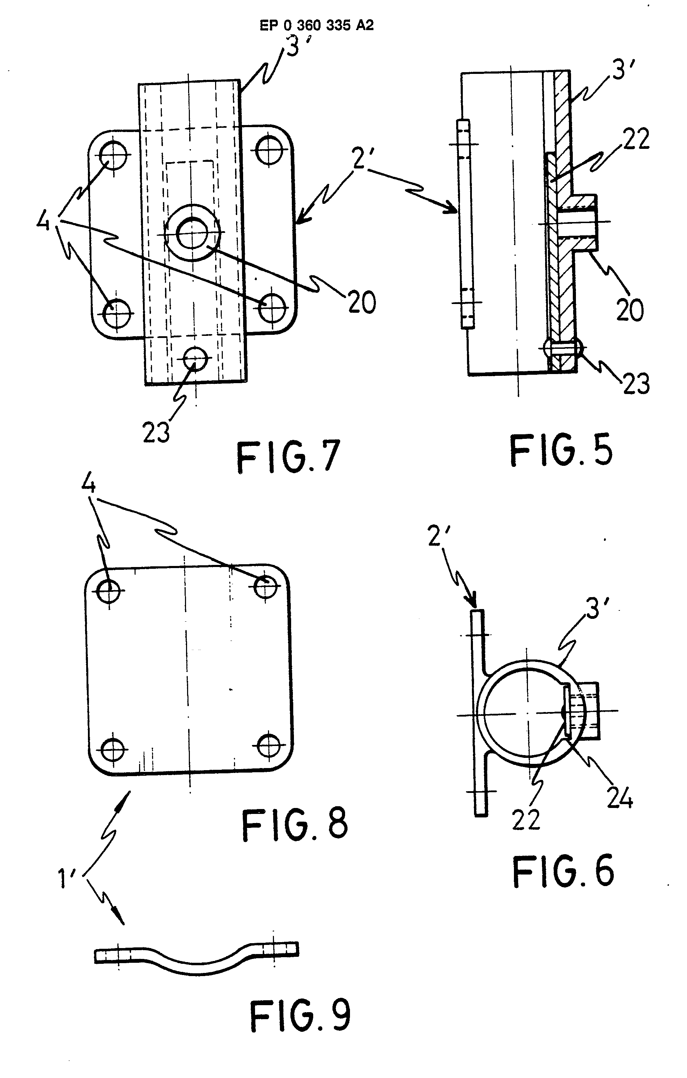

As the fork 13' of the safety device 10' is protected or covered normally by a layer 21 of plastic material, as shown in figure 4, the butterfly screw 15 if pressed directly on it would end up damaging it in successive actions. To prevent this the flexible sheet 22 which is fastened by one of its ends to the wall of the tube 3 by means of a rivet 23 or the like (see figure 5) is placed between them.

Due to the fact that the plate 2' and the tube 3' are preferably made by molding and therefore in a single piece, the tube 3' can easily have a slotted recess 24 in which the flexible sheet 22 is housed, as clearly seen in figures 5 and 6. Upon driving the butterfly screw 15, the flexible sheet 22 is separated from the bottom of the slotted recess 24 in order to put itself tangentially to the circular section of the fork 13', through which during the tightening stage the deterior of the former does not take place.

Although in this embodiment shown in figures 3 to 9, the square plate 2' and the tube 3' are obtained by molding in a single piece, they may also be obtained in a similar piece by welding a tubular portion to a rectangular plate. In this case, the flexible sheet 22 would advantageously have in the end provided with a hole for the passing of the rivet 23 a curvature adapted to the inside diameter of said tube in order to facilitate assembly.

## Claims

1.- Support for safety devices for two-wheeled vehicles, which being of the type of those that are coupled to the vehicle for fastening of a fork type safety device, is characterized because it consists of two strips (1-2), generally rectangular, foreseen with paired opening passages (4-5) of respective screws (6) of coupling and immobilizing of the support upon one of the tubular sections (7) of the frame of the vehicle, which thus remains arranged between the strips (1) and (2); having foreseen that one of said strips has solidly connected to it and in one of its outer surfaces, a tubular portion (3) through whose axial opening (11) one of the sections (12) of the fork (13) of the lock (10) is made to pass, which remains immobilized with the tightening of a screw (15) which is threaded in a drilled hole (16) made radially in the wall of the tubular portion (3.)

2.- Support for safety devices for two-wheeled vehicles, characterized because the inside end of the immobilization screw (15) of the safety device (10) has a radial widening which prevents removal of said screw, while the outer end is toped out in a way of operation.

3.- Support for safety devices for two-wheeled vehicles, according to the previous claims, characterized because at least two paired holes (5) of said strip (1) and (2) are elongated.

4. Support for safety devices for two-wheeled vehicles, according to the above claims, characterized because the inside surface of the strips have a non-skid and dampening coating (9.)

5. Support for safety devices for two-wheeled vehicles, according to the previous claims, characterized because the number of holes in each one of the strips (1) and (2) is four.

6. Support for safety devices for two-wheeled vehicles, according to claim 1, characterized because the mentioned tube (3'), molded together with the corresponding plate (2') has in diametral opposition to the former and longitudinally, an inner slotted recess (24) in which a flexible sheet (22) fixed by one of its end is located.

7. Support for safety devices for two-wheeled vehicles, according to claim 6, characterized because the plate (1') without the tube (3') has an "omega" section to adapt its arched portion to the tubular section (7) in which it is applied.

8. Support for safety devices of two-wheeled vehicles, according to claim 2, characterized because the inside end of the butterfly screw (15) has a diametral hole (17) in which a pin (18) which prevents the screw from coming out is situated.

EP 0 360 335 A2

FIG.1

FIG.2

FIG.3

FIG.4

FIG.7

FIG.5

FIG.8

FIG.6

FIG.9